# EUROPEAN PATENT APPLICATION

(11) **EP 3 851 305 A1**
(43) Date of publication of application: **21.07.2021**
(21) Application number: 18933316.4
(22) Date of filing: 14.09.2018
(51) Int. Cl.: B60G 21/00

(54) **VEHICLE SUSPENSION (VARIANTS)**

(71) Applicant: Beylin, Georgiy Volodymyrovych, Kyivska oblast, 08714 (UA); Petrenko, Sergiy Yuriiovich, Kyiv, 02222 (UA)
(72) Inventor: Beylin, Georgiy Volodymyrovych, Kyivska oblast, 08714 (UA); Petrenko, Sergiy Yuriiovich, Kyiv, 02222 (UA)
(74) Representative: Sloboshanin, Sergej
(86) International application number: PCT/UA2018/000099
(87) International publication number: WO 2020/055373

(57) **Abstract**

A vehicle suspension comprises a frame, a front and a rear axles, two L-shaped arms mounted on the frame. The axles are rigid or have an independent suspension, or one is rigid and one has an independent suspension. Each axle is being movably attached to the frame by means of a bearing assembly and two reaction rods. One end of each of the L-shaped arms is kinematically coupled with the corresponding axle, and the second ends are interconnected by a connecting rod. Achieved is an increased resistance of the suspension.

## Description

The present inventions relate to structural components of vehicles, and more particularly to suspensions of both usual cars and also preferably compact cars and electric vehicles, special vehicles, including baby buggies and wheelchairs, golf carts, carts for video cameras, etc. Unlike the conventional solutions, the design of the proposed suspension provides the vehicle with increased resistance to rollover.

The suspension or spring system of a vehicle is a combination of parts, assemblies and mechanisms that play the role of a connecting link between body the vehicle and the road.

In the present application the motion parts are the wheels, tracks or skies of the ground vehicle.

In terms of the achieved result, the closest analog is a vehicle suspension, comprising a frame with a front and a rear axles attached to the opposite parts thereof [information of the site https://www.wimed.it/prodotti/scooter/tiger/]

In the described suspension, the front axle is made according to the independent scheme with two A-arms. Rear rigid axle is mounted on a spring-loaded subframe. This suspension design is aimed to distribute vehicle weight evenly among all four wheels and to overcome minor irregularities of a usual road surface.

However, due to the use of spring elements, the described suspension has a limited travel, which does not allow a vehicle to overcome significant obstacles, for example, when moving on dirt roads or running over a curb, a manhole, etc., which causes cross-axling of the suspension and loss of the vehicle steerability. In addition, when only one wheel runs over an obstacle, considerable torsional stresses occur in the frame, which, due to fatigue damage accumulation, significantly reduces the life of the structure. Therefore, the described suspension is not reliable enough.

The present invention is aimed to provide such a vehicle suspension, which would be more reliable and would ensure a constant and even vehicle weight distribution among all four wheels, to maintain a constant value of the coefficient of traction for all wheels, when the vehicle is moving over rough terrain with a wide range of roughness levels of the roadway, including dirt roads and obstacles such as curbs, manholes, etc. without involvement of spring elements. The task is solved by creating conditions to increase the suspension travel without changing the size of the shock absorbers and springs, but by creating a rigid connection between the axles and the frame.

A vehicle suspension according to the first embodiment, like a vehicle suspension of the prior art, comprises a frame with a front and a rear axles, respectively, attached to the opposite parts thereof, ***while*** according to the invention, the suspension comprises two rigid axles, each being movably attached to the frame by means of a bearing assembly and two reaction rods, and is supplemented by two L-shaped arms mounted on the frame such that one end of each of said arms is kinematically coupled with the corresponding axle, and another ends are interconnected by a connecting rod.

The feature of the first embodiment of the proposed suspension is that it comprises a subframe, whereon the rigid axle is installed, and the subframe is connected to the frame through rubber-metal hinges and a spring element with a shock absorber.

In addition, a feature of the first embodiment of the proposed suspension is that each L-shaped arm is mounted on the subframe and is kinematically coupled with the corresponding axle.

Another feature of the first embodiment of the proposed suspension is that the connecting rod is made of two parts connected by a linear actuator.

A vehicle suspension according to the second embodiment, like a vehicle suspension of the prior art, comprises a frame with a front and a rear axles, respectively, attached to the opposite parts thereof, ***while*** according to the invention, the suspension comprises two axles with independent suspension, each of the axles being movably attached to the frame by means of a bearing assembly and two reaction rods, and is supplemented by two L-shaped arms mounted on the frame such that one end of each of said arms is kinematically coupled with the corresponding axle, and another ends are interconnected by a connecting rod.

A feature of the second embodiment of the proposed suspension is that the connecting rod is made of two parts connected by a linear actuator.

A vehicle suspension according to the third embodiment, like a vehicle suspension of the prior art, comprises a frame with a front and a rear axles, respectively, attached to the opposite parts thereof, ***while*** according to the invention, the suspension comprises an axle with independent suspension and a rigid axle, each of the axles being movably attached to the frame by means of a bearing assembly and two reaction rods, and is supplemented by two L-shaped arms mounted on the frame such that one end of each of said arms is kinematically coupled with the corresponding axle, and another ends are interconnected by a connecting rod.

The feature of the third embodiment of the proposed suspension is that it comprises a subframe, whereon the rigid axle is installed, and the subframe is connected to the frame through rubber-metal hinges and a spring element with a shock absorber.

Another feature of the third embodiment of the proposed suspension is that each L-shaped arm is mounted on the subframe and is kinematically coupled with the corresponding axle.

Yet another feature of the third embodiment of the proposed suspension is that the connecting rod is made of two parts connected by a linear actuator.

The proposed suspension options allow to increase the suspension travel without changing the size of the shock absorbers and springs, i.e. maintaining the minimum height of the device by creating a rigid and adjustable connection between the axles and the frame.

In the first embodiment, the use of two rigid axles in the proposed suspension allows, for example, in a standard SUV, to increase the suspension travel, thus improving its off-road performance and increasing the ride comfort for a driver and passengers.

In the second embodiment, the use of two axles with independent suspension in the proposed suspension allows to obtain a long travel suspension for an all-wheel drive vehicle with minimal vertical dimensions of the suspension.

In the third embodiment, the use of the axle with independent suspension and the rigid axle in the proposed suspension allows to create a long travel suspension from a standard set of parts, since the modernization of a traditional suspension does not require resizing the parts to achieve new improved performance.

Linear actuator is a device converting rotational movement of a shaft into mechanically controlled linear motion within the travel range.

At the time of patent information research performed in the process of the present application preparation the authors have not revealed any vehicle suspensions possessing the above mentioned set of essential features, which proves that the claimed technical solutions comply with "novelty" patentability criterion.

The technical result obtained from implementation of the variants of the proposed invention is in providing conditions for increasing the suspension travel without changing the shock absorbers and springs sizes, i.e. maintaining the minimum height of the device by creating a rigid and adjustable connection between the axles and the frame, which allows, in particular, to reduce the level of mechanical stresses in the suspension assemblies when the vehicle runs over an obstacle with one wheel or when it moves on a rough terrain, which increases the reliability of the suspension.

The authors have not revealed the indicated technical result in the known technical solutions of the prior art, therefore the variants of the proposed suspension may be deemed to comply with the "inventive step" patentability criterion.

The proposed variants of a vehicle suspension consist of structural elements, which may be manufactured using presently known technological methods, means and materials. They may be used in ground vehicles in different sectors of economy, therefore it is possible to conclude that the proposed solutions comply with "industrial applicability" patentability criterion.

The essence of the variants of the invention is further explained by the drawings, where:
FIGs. 1, 2 show a general kinematic scheme of the suspension.
FIGs. 3, 9, 10, 11, 13 show a general view of the suspension.
FIGs. 4, 5 illustrate the operation of the suspension arms.
FIG. 6 illustrates the first embodiment of the suspension comprising two rigid axles.
FIG. 7 illustrates the second embodiment of the suspension comprising two axles with independent suspension.
FIG. 8 illustrates the third embodiment of the suspension comprising one axle with independent suspension and one rigid axle.
FIG. 12 shows the inclination of the frame of a vehicle.

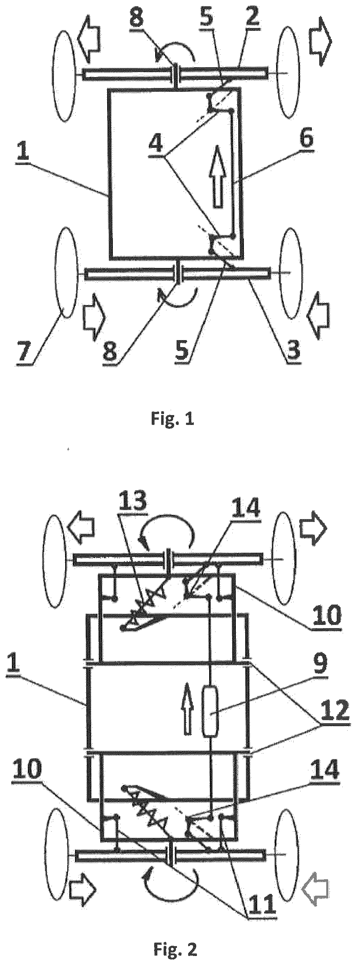

Each variant of the proposed vehicle suspension (FIGs. 1, 2) consists of a frame 1, a front axle 2, a rear axle 3, two L-shaped arms 4 mounted on the frame 1, an axle rod 5 and a connecting rod 6. One end of each L-shaped arm is connected to the corresponding axle 2 or 3, and another end are interconnected by a connecting rod 6. The front axle 2 and the rear axle 3 assembled with the wheels 7 are attached to the frame 1 by means of a bearing assembly 8. Linear actuator 9 is mounted on the connecting rod 6. The rigid axle is movably mounted on a subframe 10 and is connected to it by means of the bearing assembly 8 and two reactive rods 11. The subframe 10 is connected to the frame 1 via rubber-metal hinges 12 and a spring element with a shock absorber 13. In case of using the subframe 10, the L-shaped arm 4 is installed thereon. The suspension also comprises acceleration and frame tilt sensors 1, which are connected to the corresponding inputs of the onboard computer provided with the corresponding software product (not shown). The output of the onboard computer is connected to a linear actuator drive 9 (not shown). A vehicle containing a variant of the proposed suspension also includes a steering mechanism and a brake mechanism (not shown). In the variants of the proposed suspension, the methods for coupling transmission with driving wheels 7 are no different from the traditional ones.

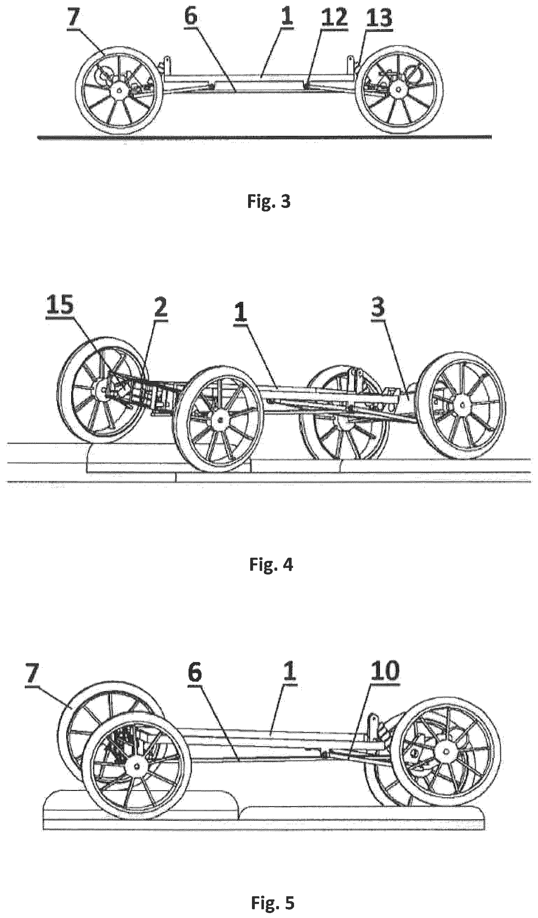

Each variant of the proposed vehicle suspension operates as follows: for proper operation of the suspension, at the assembling stage it is necessary to adjust the length of the connecting rod 6 so that in the initial state the front axle 2, the rear axle 3 and the frame 1 are parallel. Due to gravity the vehicle suspension self-aligns and evenly distributes its weight among four wheels 7, being four points of support (FIGs. 1, 2, 3). When the vehicle is moving and its wheel 7 on one of the axles 2 or 3 runs over an obstacle, the L-shaped arms 4 may turn freely due to rubber-metal hinges 14 (which are shown schematically). When this happens, the position of axles 2 and 3 relative to the frame 1, L-shaped arms 4, and as a result, under the action of gravity, the vehicle suspension self-adjusts and evenly distributes its weight among four wheels 7, while the frame 1 reaches the position of the average plane for four contact points of the wheels 7 (FIGs. 4, 5).

The suspension overcomes small obstacles due to springing properties of spring elements with shock absorbers 13 and rubber-metal hinges 12 as well as spring elements with shock absorber 15. Axles' 2 and 3 connection using two reactive rods 11 allows a significant reducing of the load on the bearing assembly 8.

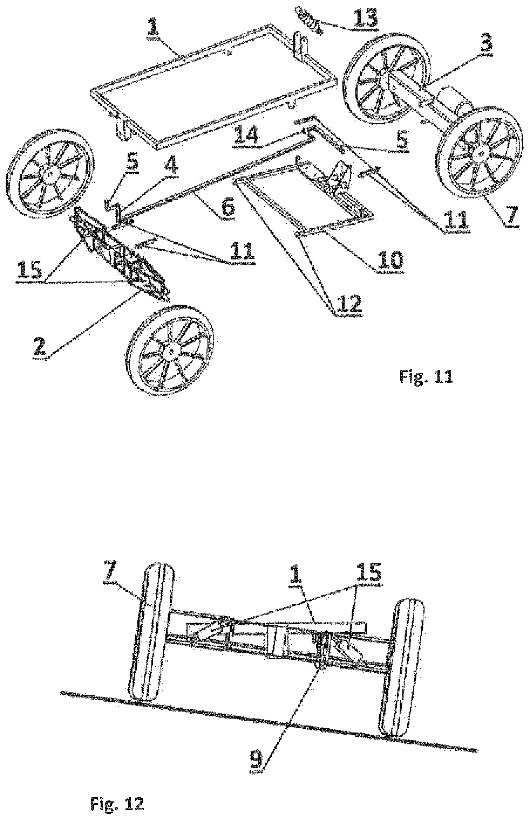

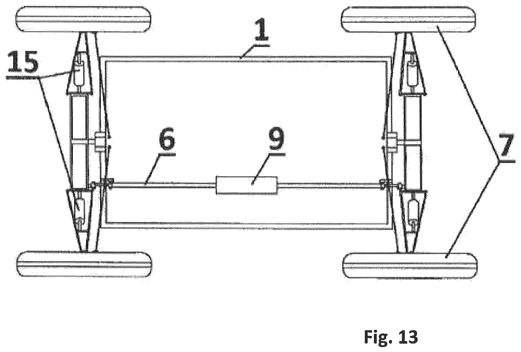

Linear actuator 9 installed on the connecting rod 6 serves to extend the performance of the suspension. When the vehicle is in a horizontal position, the change in the length of the rod 6 compared to the nominal length occurs due to the linear actuator 9 and allows tilting of the vehicle frame 1 to the right or to the left in order to compensate for the slope of the roadway, to pass a turn, or to allow passengers to leave the vehicle. The length of the connecting rod 6 may be changed by the linear actuator 9 according to the signals from the acceleration and tilt sensors input to the onboard computer or manually (FIGs. 12, 13).

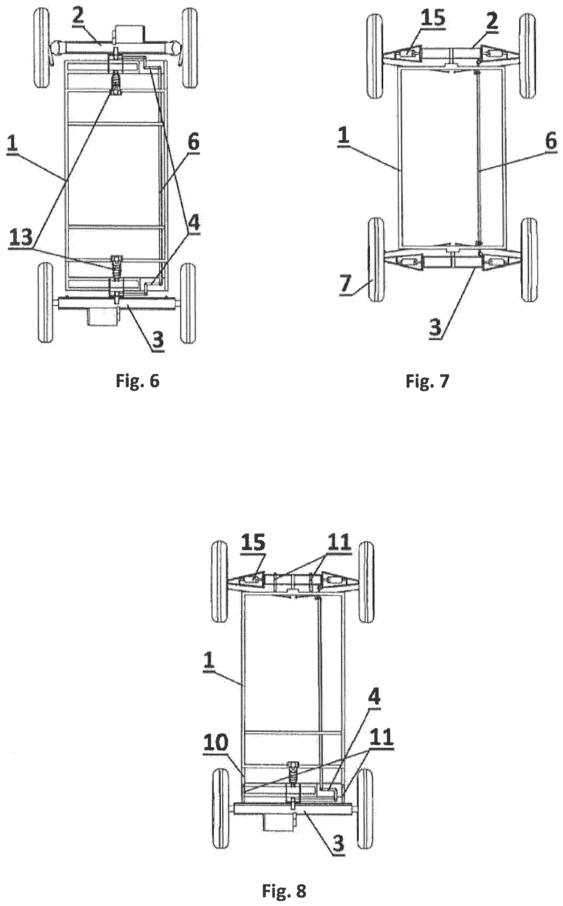

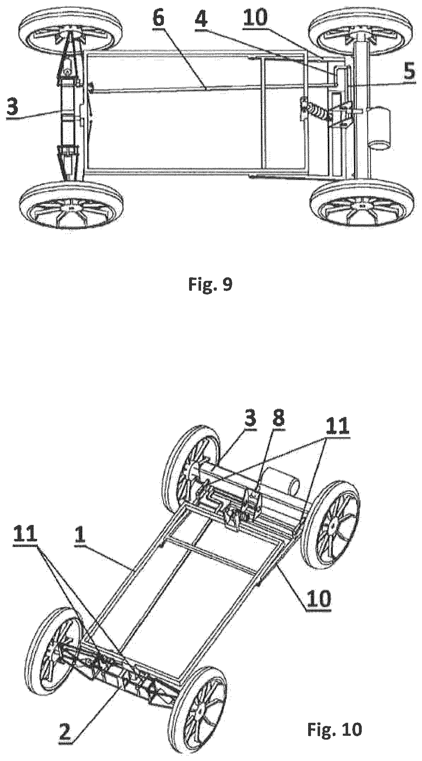

Axles 2 and 3 can be both rigid, and with independent wheels 7 suspension and they may be installed in different combinations: two rigid axles (FIG. 6), two axles with independent suspension (FIGs. 7, 13), or one axle with independent suspension and one rigid axle (FIGs. 8, 9, 10, 11). At the same time, each variant of the suspension operates in the above manner.

The proposed vehicle suspension may be used in the following products:
- baby buggies and motorized wheelchairs;
- passenger cars with both conventional internal combustion engines (ICE) and electric motors. The use of the proposed vehicle suspension in a passenger car allows to double the suspension travel without increasing the length of the springs and shock absorbers. Passing the turns with body tilt is easily implemented as well (like in case of a motorcycle);
- a golf cart, a dolly, a lunar rover and the like.

Support on all four wheels 7 (uniform and constant weight distribution) is achieved without the use of spring elements, but only due to the connection of all the wheels 7 with each other and the gravity.

Suspension is fully operational with four wheels 7 of different diameters.

List of items in the drawings:
1 - frame
2 - front axle
3 - rear axle
4 - L-shaped arm
5 - axle rods
6 - connecting rod
7 - wheel
8 - bearing assembly
9 - linear actuator
10 - subframe
11 - reactive rod
12 - rubber-metal hinge
13 - spring element with shock absorber.

## Claims

1. A vehicle suspension comprising a frame with a front and a rear axles, respectively, attached to the opposite parts thereof, ***characterized in that*** the suspension comprises two rigid axles, each being movably attached to the frame by means of a bearing assembly and two reaction rods, and is supplemented by two L-shaped arms mounted on the frame such that one end of each of said arms is kinematically coupled with the corresponding axle, and another ends are interconnected by a connecting rod.

2. The suspension according to claim 1, ***characterized in that*** it comprises a subframe, whereon the rigid axle is installed, and the subframe is connected to the frame through rubber-metal hinges and a spring element with a shock absorber.

3. The suspension according to claims 1, 2, ***characterized in that*** each L-shaped arm is mounted on the subframe and is kinematically coupled with the corresponding axle.

4. The suspension according to claims 1, 3, ***characterized in that*** the connecting rod is made of two parts connected by a linear actuator.

5. A vehicle suspension comprising a frame with a front and a rear axles, respectively, attached to the opposite parts thereof, ***characterized in that*** the suspension comprises two axles with independent suspension, each of the axles being movably attached to the frame by means of a bearing assembly and two reaction rods, and is supplemented by two L-shaped arms mounted on the frame such that one end of each of said arms is kinematically coupled with the corresponding axle, and another ends are interconnected by a connecting rod.

6. The suspension according to claim 5, ***characterized in that*** the connecting rod is made of two parts connected by a linear actuator.

7. A vehicle suspension comprising a frame with a front and a rear axles, respectively, attached to the opposite parts thereof, ***characterized in that*** the suspension comprises a rigid axle ad an axle with independent suspension, each of the axles being movably attached to the frame by means of a bearing assembly and two reaction rods, and is supplemented by two L-shaped arms mounted on the frame such that one end of each of said arms is kinematically coupled with the corresponding axle, and another ends are interconnected by a connecting rod.

8. The suspension according to claim 7, ***characterized in that*** it comprises a subframe, whereon the rigid axle is installed, and the subframe is connected to the frame through rubber-metal hinges and a spring element with a shock absorber.

9. The suspension according to claims 7, 8, ***characterized in that*** each L-shaped arm is mounted on the subframe and is kinematically coupled with the corresponding axle.

10. The suspension according to claims 7, 9, ***characterized in that** the* connecting rod is made of two parts connected by a linear actuator.
